# EUROPÄISCHE PATENTSCHRIFT

(11) **EP 2 870 206 B1**
(45) Veröffentlichungstag und Bekanntmachung des Hinweises auf die Patenterteilung: **25.05.2016**
(21) Anmeldenummer: 13733302.7
(22) Anmeldetag: 02.07.2013
(51) Int. Cl.: C09D 9/00

(54) **DEMARKIERUNGSMITTEL**
MARKING REMOVAL AGENT
AGENT DE DÉLIMITATION

(30) Priorität: 03.07.2012 DE 102012013137
(43) Veröffentlichungstag der Anmeldung: 13.05.2015
(73) Patentinhaber: Häffner GmbH & Co. KG, 71679 Asperg (DE)
(72) Erfinder: STÖCKLE, Markus, 71679 Asperg (DE)
(74) Vertreter: Kossak, Sabine
(86) Internationale Anmeldenummer: PCT/EP2013/063929
(87) Internationale Veröffentlichungsnummer: WO 2014/006041

(56) Entgegenhaltungen:
- CN-A- 101 899 365
- US-A- 5 849 682

## Beschreibung

Gegenstand der Erfindung ist eine Zusammensetzung aus einem aromatischen Alkohol und mindestens einem dibasischen Ester sowie die Verwendung dieser Zusammensetzung als Demarkierungsmittel.

Markierungen werden vielfach eingesetzt, um Abläufe zu regeln. So werden beispielsweise Spurlinien, Streifen und Pfeile zur Verkehrsführung auf die Fahrbahn aufgebracht. In Lager- und Produktionshallen finden sich Markierungen, die z.B. Lagerflächen begrenzen oder Sperrbereiche markieren sollen.

Zur Markierung werden bevorzugt lösungsmittelhaltige 1 K-Farben (Einkomponentenfarben) auf Basis von Reinacrylatharzen, 2K-Farben (Zweikomponentenfarben) auf Basis von epoxidmodifizierten Acrylharzen oder wasserverdünnbare 1 K-Farben auf Basis von Reinacrylatdispersionen verwendet.

Die verwendeten Farben weisen üblicherweise aufgrund der Beanspruchungen, denen Fahrbahn- oder Hallenbodenmarkierungen ausgesetzt sind, eine gute Anhaftung an den Untergrund und Beständigkeit auf. Es besteht jedoch häufig die Notwendigkeit, vorhandene Fahrbahn- oder Hallenmarkierungen wieder zu entfernen. Eine Entfernung von Straßenmarkierungen beispielsweise kann erforderlich sein, wenn Reparaturarbeiten an der Fahrbahn durchgeführt werden, die Spurführung geändert werden soll oder eine Umleitung oder Umgehung eingerichtet werden soll.

Es sind verschiedene Verfahren bekannt, um Markierungen, insbesondere solche auf Böden, wieder zu entfernen. Fahrbahn- oder Hallenmarkierungen werden üblicherweise durch eines der folgenden Verfahren entfernt:
- Abdecken der Markierungen mit grauer oder schwarzer Farbe je nach Untergrund;
- Abfräsen der Markierungen;
- Ausfräsen der Markierungen und Verfüllen der Fräsflächen mit bituminöser Masse;
- Entfernung von Markierungen mittels Kugel- oder Sandstrahlverfahren;
- Entfernung von Markierungen unter Einwirkung von Wärme.

Ein häufig auftretender Nachteil dieser Verfahren ist, dass eine sogenannte Phantom- oder Geistermarkierung auf dem Untergrund zurückbleibt. Während dieses in Hallen ein eher ästhetisches Problem ist, stellen die Phantom- oder Geistermarkierungen im Straßenverkehr ein teilweise lebensbedrohliches Risiko dar. Insbesondere bei regnerischem Wetter, aber auch bei bestimmten Lichtverhältnissen oder Dunkelheit ist nicht immer klar erkennbar, welches die richtige Fahrbahnmarkierung ist. Dieses gefährdet die Verkehrssicherheit in erheblichem Maße.

Die typischerweise eingesetzten Verfahren wie das Abfräsen alter Markierungen sind häufig mit einem hohen Energieaufwand verbunden. Beim Hochdruckwasserverfahren, bei dem alte Markierungen unter Hochdruck vom Untergrund entfernt werden, wird üblicherweise Wasser mit einem Druck von 2500 bis 3000 bar auf die Markierungen gerichtet. Ein weiterer Nachteil dieses sehr häufig angewendeten Verfahrens ist, dass sehr große Mengen an verschmutztem Wasser anfallen, die teuer entsorgt werden müssen. In Zeiten gesteigerten Umweltbewusstseins stellt sich dieses Verfahren zudem als wasserverschwenderisch dar.

Das Sandstrahlverfahren, ein für die Entfernung von Markierungen durchaus effektives Verfahren, führt bei Anwendung häufig zu einer Beschädigung der angrenzenden Vegetation und/oder Beschädigung des Lacks an der Baustelle vorbeifahrender Fahrzeuge.

Aus dem Stand der Technik ist ebenfalls bekannt, Demarkierungsmittel in Kombination mit einer Druckwasserbehandlung einzusetzen, um Markierungen von Untergründen wie Fahrbahnen abzulösen.

DE 29 27 968 A1 beispielsweise beschreibt ein Demarkierungsmittel, enthaltend 50 - 70 Gew.-% Chlorkohlenwasserstoff, 3 - 10 Gew.-% aromatischen Kohlenwasserstoff, 2 - 9 Gew.-% Ketone, 2 - 10 Gew.-% niederen Alkohol, 5 - 11 Gew.-% höheren Alkohol, 0,5 - 3 Gew.-% Quellmittel, 0,5 - 1,5 Gew.-% Netzmittel und 1 - 3 Gew.-% alkalisch wirkende Rohstoffe. Ein solches Mittel ist in höchstem Grade gesundheitsschädlich und umweltgefährdend.

Auch ist ein solches Mittel nicht für jeden Untergrund geeignet. Insbesondere Hallenfußböden werden durch solche aggressiven Zusammensetzungen beschädigt.

Für andere Anwendungsbereich sind Mittel auf Basis dibasischer Ester bekannt, mit denen spezielle Verunreinigungen entfernt werden können. Die CN 101 899 365 A offenbart einen Klebstoffentferner, der neben einer Vielzahl von Komponenten Adipinsäuredimethylester und Benzylalkohol enthält. Der Klebstoffentferner ist zur Beseitigung von Klebstoffresten, insbesondere von Haftklebeetiketten oder doppelseitigen Klebeband geeignet.

Ebenso beschreibt die US 8,849,682 einen Reiniger, der ein schlecht wasserlösliches organisches Lösemittel und ein organisches Lösungsmittel enthält, das auch ein dibasischer Ester sein kann. Mit dieser Reinigungszusammensetzung kann beispielsweise Fett, wie Vaseline, entfernt werden.

Aufgabe war es daher, ein Demarkierungsmittel bereitzustellen, mit welchem sich Markierungen von unterschiedlichen Untergründen bei guter Materialverträglichkeit effektiv und möglichst rückstandslos und dabei unter Vermeidung von Beschädigungen angrenzender Areale entfernen lassen, und welches dabei möglichst nicht umweltgefährdend und gesundheitsschädlich ist.

Die Aufgabe wird gelöst durch eine Zusammensetzung, enthaltend 5 - 50 Gew.-% mindestens eines aromatischen Alkohols und 2 - 70 Gew.-% mehrerer dibasischer Ester, von denen mindestens einer ein Ester der Formel (i) 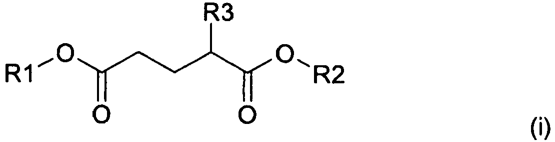 ist, wobei R1, R2 und R3 unabhängig voneinander lineare oder verzweigte Alkylreste mit 1 bis 10 Kohlenstoffatomen sind, und wobei ein dibasischer Ester der Formel (i) der dibasische Ester 2-Methylpentandisäuredimethylester (R1, R2 = CH3; R3 = CH3) ist.

Unter einem dibasischen Ester werden erfindungsgemäß solche Ester von Dicarbonsäuren verstanden, bei denen beide Carboxylfunktionen verestert sind. Geeignete dibasische Ester sind beispielsweise der Diisopropyl- oder Diisobutylester von Glutarsäure, Bernsteinsäure, Adipinsäure oder 2-Methyl-pentandisäuredimethylester (Dimethyl-2-methylpentandioat) oder eine Mischung dieser Ester. Besonders bevorzugt ist als Ein Ester der Formel (i) ist der dibasische Ester 2-Methylpentandisäuredimethylester (R1, R2 = CH3; R3 = CH3).

Nachfolgend sind beispielhaft einige weitere dibasische Ester aufgelistet, welche neben dem mindestens einen dibasischen Ester der Formel (i) in erfindungsgemäßen Zusammensetzungen enthalten sein können:
Adipinsäuredimethylester (Dimethyladipat): 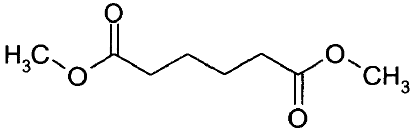
Glutarsäuredimethylester (Dimethylglutarat): 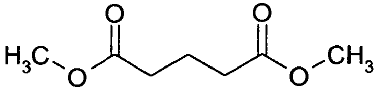
Bernsteinsäuredimethylester (Dimethylsuccinat): 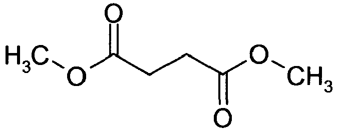
Malonsäurediethylester (Diethylmalonat): 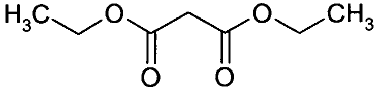
Malonsäuredimethylester (Dimethylmalonat): 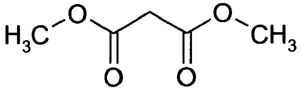
Methylmalonsäurediethylester (Diethylmethylmalonat): 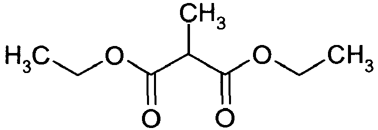
Oxalsäurediethylester (Diethyloxalat): 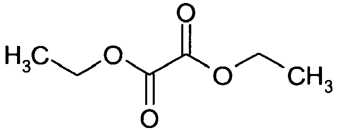
Oxalsäuredimethylester (Dimethyloxalat): 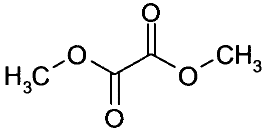
Weinsäurediethylester (Diethyltartrat): 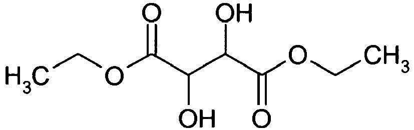
Bevorzugte weitere dibasische Ester sind folglich Carbonsäureester der Formel (ii) 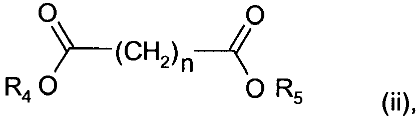
wobei n = 0 bis 10 ist und R4 und R5 unabhängig voneinander lineare oder verzweigte Alkylreste mit 1 bis 10 Kohlenstoffatomen sind, oder Carbonsäureester, die gegenüber dem Ester der Formel (ii) eine oder mehrere Substitution/en durch einen linearen oder verzweigten Alkylrest mit 1 bis 10 Kohlenstoffatomen oder durch eine Hydroxyfunktion in der Kette aufweise.

Bevorzugt wird der dibasische Ester in Mengen von 30 - 50 Gew.-%, besonders bevorzugt in Mengen von 20 - 30 Gew.-% eingesetzt. Ist in der Zusammensetzung mehr als ein dibasischer Ester enthalten, beträgt der Anteil der dibasischen Ester der Formel (i) mindestens 2 Gew.-%.

Bevorzugte erfindungsgemäße Zusammensetzungen enthalten 20 - 45 Gew.-% an aromatischem Alkohol, besonders bevorzugte sogar nur 5 - 30 Gew.-%. Benzylalkohol-haltige Zusammensetzungen beispielsweise sind erst ab einem Gehalt von 24 Gew.-% Benzylalkohol kennzeichnungspflichtig, so dass sich bei entsprechender Wahl der weiteren Komponenten und ihrer Menge erfindungsgemäße Zusammensetzungen erhalten lassen, die kennzeichnungsfrei sind.

Bevorzugte Ausführungsformen erfindungsgemäßer, zur Entfernung von Markierungen geeigneter Zusammensetzungen sind nachfolgend beschrieben oder Gegenstand der Unteransprüche.

Als aromatische Alkohole für erfindungsgemäße Zusammensetzungen sind grundsätzlich alle aromatischen Alkohole einsetzbar. Der Fachmann wird vorzugsweise jedoch solche verwenden, deren gesundheits- und umweltgefährdendes Potential möglichst gering ist. Solche aromatischen Alkohole sind beispielsweise Benzylalkohol, 2-Benzylheptanol, 2-Benzyloxyethanol, 4-Benzyloxybenzylalkohol, 3,4-Dimethoxybenzylalkohol, 3,5-Dimethylbenzylalkohol, 4-Ethylbenzylalkohol, 4-Isopropylbenzylalkohol, 2-Methylbenzylalkohol, 4-Methoxybenzylalkohol, 2-Phenoxy-1-ethanol, 4-Phenyl-1-butanol, 1-Phenyl-1-propanol, 3-Phenyl-1-propanol, 4-tert-Butylbenzylalkohol oder *trans*-3-Phenylallylalkohol und deren Mischungen. Besonders bevorzugt ist die Verwendung von Benzylalkohol.

Vorzugsweise enthalten erfindungsgemäße Zusammensetzungen neben den genannten Wirkstoffen noch weitere Bestandteile, welche insbesondere ihre Anwendungseigenschaften verbessern und teilweise die Wirkung als Demarkierungsmittel noch verstärken.

Optionale zusätzliche Bestandteile sind beispielsweise Verdicker. Mit Verdickern lässt sich die Viskosität erfindungsgemäßer Mittel auf den jeweiligen Einsatzzweck einstellen. Beispielsweise kann durch ausreichend verdickte Zusammensetzungen verhindert werden, dass das Demarkierungsmittel nach dem Auftragen bei geneigten Flächen von dem Bereich des Untergrunds mit zu entfernender Markierung abläuft. Es kann so eine ausreichende Einwirkzeit gewährleistet werden. Geeignete Verdicker sind üblicherweise aus der Gruppe Agar-Agar, Carrageen, Tragant, Gummi arabicum, Guar-Mehl, Johannisbrotbaumkernmehl, Stärke, Gelatine, Casein, der Alginate, Pektine, Polyosen, Dextrine, Carboxymethylcellulose, Celluloseether, Polyacryl- und Polymethacrylverbindungen, Vinylpolymere, Polycarbonsäuren, Polyether, Polyimine, Polyamide, Titandioxide, Siliciumdioxide oder Mischungen hiervon ausgewählt, wenngleich auch andere Verdicker genutzt werden können.

Verdicker werden in erfindungsgemäßen Zusammensetzungen vorzugsweise in Mengen von 0,5 - 10 Gew.-%, besonders bevorzugt in einer Menge von 1 - 5 Gew.-% eingesetzt.

Erfindungsgemäße Zusammensetzungen enthalten bevorzugt außerdem Tenside, welche aus der Gruppe der anionischen, kationischen, amphoteren und/oder nichtionischen Tenside ausgewählt sein können. Geeignete anionische Tenside sind beispielsweise solche aus der Gruppe der Sulfonate wie Natriumtoluolxylolsulfonat, Natriumtoluolsulfonat, Natriumcumolsulfonat, Natriumdecyldiphenylethersulfonat, Natriumdodecylbenzolsulfonat, Natriumdodecyldiphenylethersulfonat, Natrium-1-octansulfonat, Natriumtetradecansulfonat, Natriumpentadecansulfonat, Natriumheptadecansulfonat und Kaliumtoluolsulfonat. Ebenso sind anionische Tenside beispielsweise aus der Gruppe der Alkylcarboxylate geeignet. Geeignete amphotere Tenside sind beispielsweise N-Alkylglycine, N-Alkylpropionsäuren, N-Alkylaminobuttersäuren, N-Alkyliminodipropionsäuren, N-Hydroxyethyl-N-alkylamidopropylglycin, N-Alkyltaurin, N-Alkylsacosin, 2-Alkylaminopropionsäuren und N-Alkylaminoessigsäuren mit 8 bis 24 Kohlenstoffatomen in der Alkylgruppe. Geeignete nichtionische Tenside sind z.B. Alkylpolyglycoside. Für erfindungsgemäße Zusammensetzungen sind aufgrund der bevorzugten Anwendung des Demarkierungsmittels in Kombination mit Wasser als Tenside biologisch abbaubare, vor allem aber schaumarme Tenside bevorzugt. Zu diesen Tensiden gehören beispielsweise die Tenside der Plurafac® LF-Gruppe und der Pluronic®-Gruppe der BASF.

Die Menge von Tensiden in erfindungsgemäßen Zusammensetzungen beträgt bevorzugt 1 - 5 Gew.-%, besonders bevorzugt 2 - 4 Gew.-%.

Um den Geruch erfindungsgemäßer Zusammensetzungen zu verbessern und insbesondere den Eindruck eines relativ harmlosen Mittels zu transportieren, ist es bevorzugt, erfindungsgemäßen Zusammensetzungen Duftöle oder natürliche, naturidentische oder synthetische Duftstoffe zuzusetzen. Geeignete, wohlriechende Duftstoffe sind beispielsweise Orangen- oder Zitronenterpene oder Ethyl-2-naphthylether. Einen angenehmen Duft bewirkt auch Wintergrünöl (Salicylsäuremethylester).

Bevorzugt werden nur solche Mengen an Duftstoffen bzw. Duftölen verwendet, die nicht zu einer Kennzeichnungspflicht führen. Beispielsweise werden daher nur bis zu 0,25 Gew.-% von Orangenterpenen eingesetzt.

Weitere geeignete Hilfsstoffe, welche bei Bedarf Bestandteil erfindungsgemäßer Zusammensetzungen sein können, sind Lösungsvermittler auf Basis von Glykolen oder Glykolethern wie beispielsweise Dipropylengykol, Tripropylenglykol-n-butylester, Dipropylenglykol-n-propylether, Dipropylenglykol-n-butylether, Dipropylenglykoldimethylether, Dipropylenglykolmonomethylether, Propylenglykolisopropylether, Tributylphenolpolyglykolether, Propylenglykoltertiärbutylether, Hexylenglykol, 1,2-Propylenglykol, Dipropylenglykol, Monoethylenglykol, Butylglykol, Dibutylglykol und/oder Methyldiglykol. Lösungsvermittler werden bevorzugt in Mengen von 1 - 10 Gew.-%, besonders bevorzugt in Mengen von 2 - 5 Gew.-% eingesetzt. Lösungsvermittler dienen dazu, die abgelöste Farbe in Lösung zu halten und ein "Ausschleimen" der Farbe zu verhindern.

Eine allgemeine Formel für eine erfindungsgemäße Zusammensetzung, die neben der synergistischen Wirkstoffkombination weitere Bestandteile enthält, lautet beispielsweise:
- 5 - 50 Gew.% mindestens eines aromatischen Alkohols,
- 2 - 70 Gew.% eines oder mehrerer dibasischen/r Ester/s, von denen mindestens einer ein Ester der Formel (i) 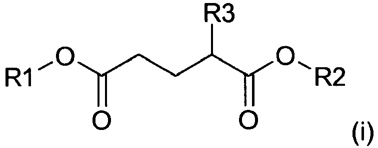 ist,
   wobei R1, R2 und R3 unabhängig voneinander lineare oder verzweigte Alkylreste mit 1 bis 10 Kohlenstoffatomen sind,
- mindestens ein Tensid,
- mindestens ein Duftöl oder einen natürlichen, naturidentischen oder synthetischen Duftstoff,
- einen Verdicker und
- ggf. sonstige Hilfsstoffe, beispielsweise ausgewählt aus der Gruppe der Lösungsvermittler auf Basis von Glykolen oder Glykolethern.

Erfindungsgemäße Zusammensetzungen lassen sich einfach herstellen, indem nacheinander Lösungsmittel, d.h. aromatischer Alkohol, dibasischer Ester und ggf. Dicarbonsäuremonoester, Hilfsstoffe und anschließend das Verdickungsmittel zusammengegeben werden. Nach kurzem Rühren bildet sich eine klare, viskose Flüssigkeit, die direkt als Demarkierungsmittel verwendet werden kann.

Mit der erfindungsgemäßen Zusammensetzung lassen sich Markierungen von beliebigen Untergründen, insbesondere von Fahrbahnen oder Hallenböden, entfernen.

Gegenstand der Erfindung ist somit weiterhin die Verwendung der erfindungsgemäßen Zusammensetzung als Demarkierungsmittel, insbesondere zur Entfernung von Straßen- und Fahrbahnmarkierungen, Bodenmarkierungen, Flächenmarkierungen, Radwegmarkierungen, Lager- und Produktionshallenmarkierungen, d.h. von Markierungen von Fahrbahnen und Hallenböden.

Eine den Untergrund und die Umgebung besonders schonende, geeignete Methode zur Entfernung von Markierungen umfasst das Aufbringen der erfindungsgemäßen Zusammensetzung, des Demarkierungsmittels, unter Verwendung eines luftlos zerstäubenden Spritzverfahrens (airless), von Bürsten, Pinseln, Rollen, Walzen oder Aerosolapplikation. Nach einer kurzen Einwirkzeit, üblicherweise 5 - 25 min, abhängig von der Schichtdicke der aufgetragenen Farbe, wird das erhaltene Gemisch mit einem Wasserstrahl entfernt. Es versteht sich, dass die Einwirkzeit auch länger sein kann.

Die Verwendung erfindungsgemäßer Demarkierungsmittel führt zum Erweichen der durch die in der Markierungsfarbe enthaltenen Bindemittel bewirkten Struktur. Die angelöste Farbe kann anschließend durch Einsatz von Wasser entfernt werden. Die abgelösten Farbreste finden sich üblicherweise im verwendeten Wasser wieder und bilden mit diesem ein heterogenes Stoffgemisch in Form einer Suspension oder einer instabilen Emulsion. Bei Suspensionen ist häufig eine starke Neigung der Farbreste zur Sedimentation zu beobachten.

Die Farbreste lassen sich durch bekannte Apparaturen vom Wasser trennen. Dieses ermöglicht ein Recycling des Wassers für einen weiteren Reinigungszyklus. Neben diesem zusätzlichen Aspekt hinsichtlich der vergleichsweisen Umweltfreundlichkeit erfindungsgemäßer Zusammensetzungen gegenüber bekannten Zusammensetzungen sind die Kosten für die Entsorgung des verwendeten Wassers deutlich reduziert. Nach Farbabtrennung kann bei Verwendung erfindungsgemäßer Demarkierungsmittel, deren biologische Abbaubarkeit geprüft wurde, der Wasseranteil direkt in die Kanalisation abgelassen werden.

Die abgetrennte, kompaktierte Farbe kann an der Luft getrocknet werden, um anschließend einer umweltgerechten Entsorgung zugeführt zu werden.

Zur Entfernung mittels Wasserstrahl können sogenannte Demarkierköpfe verwendet werden, welche in einem Arbeitsgang die gelöste Markierung, Schmutzpartikel, die sich auf dem Untergrund befinden, und das verwendete Wasser in einen Schmutzbehälter der Arbeitsmaschine absaugen. Der Einsatz eines Demarkierkopfes hat außerdem den Vorteil, dass der Untergrund nach Befreiung von der Farbe sogleich beinahe trocken ist.

Auch übliche Hochdruckreiniger, wie sie sich beispielsweise in üblichen Straßenreinigungsfahrzeugen finden, können zusammen mit dem erfindungsgemäßen Demarkierungsmittel zur effektiven Entfernung von Markierungen eingesetzt werden. Bei Verwendung erfindungsgemäßer Demarkierungsmittels können die Bürstenreinigungsfahrzeuge mit höherer Geschwindigkeit den Fahrbahnbelag abfahren, um die Markierungsreste zu entfernen, als dieses bei einer Entfernung der Markierungen mittels bloßem Hochdruckverfahren möglich ist.

Bei Einsatz erfindungsgemäßer Demarkierungsmittel bleiben keine störenden Phantommarkierungen zurück.

Als weiterer Vorteil erfindungsgemäßer Zusammensetzungen ist zudem deren gute biologische Abbaubarkeit zu nennen. Die biologische Abbaubarkeit wurde nach OECD 302 B Test geprüft.

Die erfindungsgemäßen Zusammensetzungen weisen zudem üblicherweise einen Flammpunkt > 120°C auf (Bestimmung nach DIN EN 22719, Verfahren nach Pensky-Martens im geschlossenen Tiegel). Die Zusammensetzungen gelten somit nicht als feuergefährlich.

### Beispiele

### Beispiel 1: Vergleichsversuche

Es wurden Vergleichslösungen V1 bis V7 und erfindungsgemäße Zusammensetzungen B1 bis B6 gemäß den Rezepturen nach Tabelle 1 hergestellt.

60 mL-Schraubdosen aus Polypropylen (Sarstedt) wurden mit 5 g Markierfarbe (Signalin M11, Stramat) gefüllt. Die Markierfarbe wurde im Wärmeschrank vollständig eingetrocknet. Anschließend wurde das Gewicht der Schraubdosen mit eingetrockneter Farbe bestimmt.

In die Schraubdosen wurden jeweils 5 ml der Vergleichslösungen bzw. der erfindungsgemäßen Lösungen gegeben. Alle Proben wurden auf gleiche Weise behandelt:

Nach 10-minütigem Stehen bei 22°C erfolgte ein 10-minütiges Rühren bei 22°C. Es wurde ein PTFE-ummantelter zylindrischer Magnetrührstab (Länge 3,8 cm; Durchmesser: 0,8 cm) verwendet. Anschließend wurde jede der Schraubdosen mit der Öffnung nach unten gehalten, so dass während eines Zeitraums von 30 Sekunden das Farb-Lösungsgemisch auslaufen konnte. Es wurde jeweils einmal mit 10 ml Isopropanol nachgespült. Nach erneutem Auslaufenlassen der Schraubdosen über einen Zeitraum von 30 Sekunden wurden die Schraubdosen bis zur Gewichtskonstanz bei Raumtemperatur getrocknet. Die Dosen mit den Farbresten wurden anschließend erneut gewogen. Aus der Differenz der beiden Wiegemesswerte wurde das Verlustgewicht ermittelt. Je höher das Verlustgewicht ist, umso besser eignen sich die Mittel als Demarkierungsmittel.

**Tabelle 1: Zusammensetzungen der Vergleichslösungen und erfindungsgemäßer Lösungen und deren Wirksamkeit**

| | V1 Gew.-% | V2 Gew.-% | V3 Gew.-% | V4 Gew.-% | V5 Gew.-% | V6 Gew.-% | V7 Gew.-% |
|---|---|---|---|---|---|---|---|
| 2-Methylpentandisäuredimethylester | 100 | - | 50 | - | - | 50 | 10 |
| Dimethyladipat | - | - | - | - | - | 11 | - |
| Dimethylglutarat | - | - | - | - | - | 30 | - |
| Dimethylsuccinat | - | - | - | - | - | 9 | - |
| Diethylmalonat | - | 100 | - | - | - | - | 20 |
| Dimethylmalonat | - | - | 50 | - | - | - | 20 |
| Diethylmethylmalonat | - | - | - | - | - | - | 10 |
| Diethyloxalat | - | - | - | - | - | - | 20 |
| Dimethyloxalat | - | - | - | 100 | - | - | 10 |
| Diethyltartrat | - | - | - | - | - | - | 10 |
| aromatischer Alkohol | - | - | - | - | 100¹⁾ | - | - |
| Verlustgewicht: | 1,3 g | 0,6 g | 0,3 g | 0,4 g | 0,8 g | 1,2 g | 1,3 g |

| | | | | | | | |
|---|---|---|---|---|---|---|---|
| ¹⁾ Benzylalkohol | | | | | | | |

**Fortsetzung Tabelle 1**

| | B1 Gew.-% | B2 Gew.-% | B3 Gew.-% | B4 Gew.-% | B5 Gew.-% | B6 Gew.-% |
|---|---|---|---|---|---|---|
| 2-Methylpentand isäuredimethylester | 43 | 37 | 50 | 51 | 52 | 54 |
| Dimethyladipat | 7 | - | - | - | - | - |
| Dimethylglutarat | 6 | - | - | - | - | - |
| Dimethylsuccinat | 9 | - | - | - | - | - |
| Diethylmalonat | - | 19 | - | - | - | - |
| Dimethylmalonat | - | - | - | - | - | 16 |
| Diethylmethylmalonat | - | - | 20 | - | - | - |
| Diethyloxalat | - | - | - | - | - | - |
| Dimethyloxalat | - | - | - | 20 | - | - |
| Diethyltartrat | - | - | - | - | 18 | - |
| aromatischer Alkohol | 35²⁾ | 44³⁾ | 30³⁾ | 29¹⁾ | 30⁴⁾ | 30⁵⁾ |
| Verlustgewicht: | 2,4 g | 2,5 g | 2,5 g | 2,6 g | 2,3 g | 2,4 g |

| | | | | | | |
|---|---|---|---|---|---|---|
| ²⁾ trans-3-Phenylallylalkohol ³⁾ 4-Methoxybenzylalkohol ⁴⁾ 3-Phenylpropylalkohol ⁵⁾ 2-Methylbenzylalkohol | | | | | | |

Mittel, die nur einen aromatischen Alkohol, nur einen dibasischen Ester oder nur einen Carbonsäuremonoester enthalten, haben sich in Versuchen als nicht ausreichend wirksam gezeigt.

Erfindungsgemäße Zusammensetzungen weisen hingegen eine synergistische Wirkung auf.

### Beispiele 2 bis 8: erfindungsgemäße Zusammensetzungen

Es wurden Demarkierungsmittel nach den Rezepturen gemäß den Beispielen 2 bis 8 hergestellt. Dazu wurden die einzelnen Bestandteile zusammengegeben. Nach kurzem Rühren bildete sich jeweils eine klare oder leicht trübe, viskose Lösung, welche direkt als Demarkierungsmittel verwendbar ist.

### Beispiel 2: eine erfindungsgemäße Zusammensetzung

- 25 Gew.-% *trans*-3-Phenylallylalkohol
- 30 Gew.-% 2-Methylpentandisäuredimethylester
- 5 Gew.-% Adipinsäuredimethylester
- 4 Gew.-% Glutarsäuredimethylester
- 6 Gew.-% Bernsteinsäuredimethylester
- 4 Gew.-% Fettalkoholalkoxylat (Plurafac® LF 221, BASF; schaumarmes nichtionisches Tensid)
- 3 Gew.-% Orangenterpene
- 2 Gew.-% Siliciumdioxid (Aerosil® 200, Evonik; spezifische Oberfläche: 200 m²/g)
- 10 Gew.-% Butylglykol
- 11 Gew.-% Natriumcumolsulfonat

### Beispiel 3: eine weitere erfindungsgemäße Zusammensetzung

- 35 Gew.-% 4-Methoxybenzylalkohol
- 30 Gew.-% 2-Methylpentandisäuredimethylester
- 15 Gew.-% Malonsäurediethylester
- 5 Gew.-% Alkylpolyglycosid (Lutensol® GD 70, BASF)
- 4 Gew.-% D-Limonen
- 2 Gew.-% Siliciumdioxid (Aerosil® 200, Evonik; spezifische Oberfläche: 200 m²/g)
- 8 Gew.-% Butyltriglykol
- 1 Gew.-% Natriumcumolsulfonat

### Beispiel 4: eine weitere erfindungsgemäße Zusammensetzung

- 23 Gew.-% 4-Methoxybenzylalkohol
- 40 Gew.-% 2-Methylpentandisäuredimethylester
- 15 Gew.-% Methylmalonsäurediethylester
- 5 Gew.-% Alkylpolyglycosid (Lutensol® GD 70, BASF)
- 5 Gew.-% Salicylsäuremethylester
- 2 Gew.-% Hydroxypropylcellulose (Methocel® 311 DOW)
- 10 Gew.-% Dipropylenglykolmethylether

### Beispiel 5: eine weitere erfindungsgemäße Zusammensetzung

- 20 Gew.-% Benzylalkohol
- 35 Gew.-% 2-Methylpentandisäuredimethylester
- 13 Gew.-% Oxalsäuredimethylester
- 5 Gew.-% Natriumlaurylethersulfat
- 5 Gew.-% Salicylsäuremethylester
- 5 Gew.-% Siliciumdioxid (Aerosil® 200, Evonik; spezifische Oberfläche: 200 m²/g)
- 10 Gew.-% Ethylenglycolmonophenylether
- 7 Gew.-% Natriumcumolsulfonat

### Beispiel 6: eine weitere erfindungsgemäße Zusammensetzung

- 21 Gew.-% 3-Phenyl-1-propanol
- 37 Gew.-% 2-Methylpentandisäuredimethylester
- 13 Gew.-% Weinsäurediethylester
- 5 Gew.-% Laurylalkohol-7-polyglykolether
- 3 Gew.-% Orangenterpene
- 4 Gew.-% Siliciumdioxid (Aerosil® 200, Evonik; spezifische Oberfläche: 200 m²/g)
- 11 Gew.-% 1,2-Propylenglykol
- 6 Gew.-% Natrium/Kaliumcumolsulfonat

### Beispiel 7: eine weitere erfindungsgemäße Zusammensetzung

- 21 Gew.-% 2-Methoxybenzylalkohol
- 37 Gew.-% 2-Methylpentandisäuredimethylester
- 11 Gew.-% Malonsäuredimethylester
- 2 Gew.-% anionisches Tensid (HOSTAPUR® SAS 93, Clariant; sekundäres Alkansulfonat)
- 6 Gew.-% Orangenterpene
- 4 Gew.-% Siliciumdioxid (Aerosil® 200, Evonik; spezifische Oberfläche: 200 m²/g)
- 13 Gew.-% 1,2-Propylenglykol
- 6 Gew.-% Natrium/Kaliumcumolsulfonat

### Beispiel 8: eine weitere erfindungsgemäße Zusammensetzung

- 25 Gew.-% *trans*-3-Phenylallylalkohol
- 45 Gew.-% 2-Methylpentandisäuredimethylester
- 4 Gew.-% schaumarmes Tensid (Pluronic® PE3100/PE4300, Blockcopolymere aus Ethylenoxid und Propylenoxid)
- 3 Gew.-% Orangenterpene
- 2 Gew.-% Siliciumdioxid (Aerosil® 300, Evonik; spezifische Oberfläche: 300 m²/g)
- 10 Gew.-% Natriumcumolsulfonat
- 7 Gew.-% Dibutylglykol
- 4 Gew.-% Butylglykol

### Beispiel 9: Entfernung von Fahrbahnmarkierungen

Die Zusammensetzungen gemäß den Beispielen 2 bis 8 wurden verwendet, um eine typische Fahrbahnmarkierung zu entfernen. Hierzu wurde das Mittel gleichmäßig in einer Schichtdicke von ca. 1 - 3 mm auf die zu entfernende Markierung aufgetragen und nach 5 min Einwirkzeit mit einem Kärcher®-Hochdruckreiniger mit einem Druck von 100 bar entfernt. In einer weiteren Versuchsreihe wurde statt des Kärcher®-Hochdruckreinigers ein Demarkierkopf verwendet. Der angewendete Wasserdruck betrug max. 250 bar.

Die Farbe wurde jeweils rückstandsfrei abgelöst. Selbst in den Vertiefungen des Fahrbahnbelags blieben keinerlei Farbrückstände zurück. Auch Phantommarkierungen waren nicht erkennbar. Der Fahrbahnbelag wurde nicht durch das Demarkierungsmittel beschädigt.

### Beispiel 10: Entfernung von Hallenbodenmarkierungen

Die Zusammensetzungen gemäß den Beispielen 2 bis 8 wurden verwendet, um vier Jahre alte, gelbe Sicherheitsmarkierungen von einem Hallenboden zu entfernen.

Hierzu wurde das Mittel gleichmäßig mittels einer Walze in einer Schichtdicke von ungefähr 1 mm auf die zu entfernende Markierung aufgetragen. Nach einer Einwirkzeit von 10 Minuten wurde die Markierung unter Verwendung eines Hochdruckreinigers unter Anwendung eines Wasserdrucks von 150 bar entfernt.

Die Farbe wurde rückstandsfrei abgelöst. Der Hallenboden wurde durch das Demarkierungsmittel nicht angegriffen.

## Patentansprüche

1. Zusammensetzung zur Entfernung von Markierungen, insbesondere von Fahrbahnmarkierungen und Hallenbodenmarkierungen, enthaltend
5 - 50 Gew.% mindestens eines aromatischen Alkohols,
2 - 70 Gew.% eines oder mehrerer dibasischer Ester, von denen mindestens einer ein Ester der Formel (i) 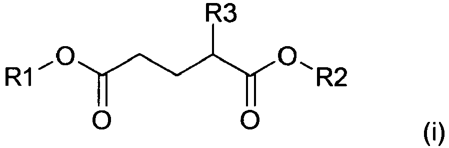 ist, wobei R1, R2 und R3 unabhängig voneinander lineare oder verzweigte Alkylreste mit 1 bis 10 Kohlenstoffatomen sind.

2. Zusammensetzung nach Anspruch 1, **dadurch gekennzeichnet, dass** der dibasische Ester der Formel (i) 2-Methylpentandisäuredimethylester ist.

3. Zusammensetzung nach Anspruch 1 oder 2, **dadurch gekennzeichnet, dass** als weiterer dibasischer Ester ein Carbonsäureester der Formel (ii) 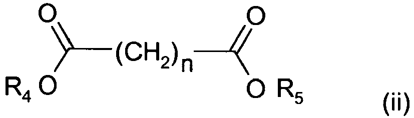 enthalten ist, wobei n = 0 bis 10 ist und R4 und R5 unabhängig voneinander lineare oder verzweigte Alkylreste mit 1 bis 10 Kohlenstoffatomen sind, oder ein Carbonsäureester, der gegenüber dem Ester der Formel (ii) eine oder mehrere Substitution/en durch einen linearen oder verzweigten Alkylrest mit 1 bis 10 Kohlenstoffatomen oder durch eine Hydroxyfunktion in der Kette aufweist.

4. Zusammensetzung nach einem der vorhergehenden Ansprüche, **dadurch gekennzeichnet, dass** die Zusammensetzung insgesamt 30 bis 50 Gew.-% dibasische Ester enthält.

5. Zusammensetzung nach einem der vorhergehenden Ansprüche, **dadurch gekennzeichnet, dass** die Zusammensetzung 20 - 30 Gew.-% aromatischen Alkohol enthält.

6. Zusammensetzung nach einem der vorhergehenden Ansprüche, **dadurch gekennzeichnet, dass** der aromatische Alkohol ausgewählt ist aus gesättigten oder ungesättigten, aromatischen, substituierten, unsubstituierten, flüssigen oder festen Alkoholen, bevorzugt aus Benzylalkohol, 2-Benzylheptanol, 2-Benzyloxyethanol, 4-Benzyloxybenzylalkohol, 3,4-Dimethoxybenzylalkohol, 3,5-Dimethylbenzylalkohol, 4-Ethylbenzylalkohol, 4-Isopropylbenzylalkohol, 2-Methylbenzylalkohol, 4-Methoxybenzylalkohol, 2-Phenoxy-1-ethanol, 4-Phenyl-1-butanol, 1-Phenyl-1-propanol, 3-Phenyl-1-propanol, 4-tert-Butylbenzylalkohol oder *trans*-3-Phenylallylalkohol und deren Mischungen, wobei der Alkohol besonders bevorzugt Benzylalkohol ist.

7. Zusammensetzung nach einem der vorhergehenden Ansprüche, **dadurch gekennzeichnet, dass** die Zusammensetzung einen Verdicker enthält, vorzugsweise ausgewählt aus der Gruppe Agar-Agar, Carrageen, Tragant, Gummi arabicum, Guar-Mehl, Johannisbrotbaumkernmehl, Stärke, Gelatine, Casein, der Alginate, Pektine, Polyosen, Dextrine, Carboxymethylcellulose, Celluloseether, Polyacryl- und Polymethacrylverbindungen, Vinylpolymere, Polycarbonsäuren, Polyether, Polyimine, Polyamide, Titandioxide, Siliciumdioxide oder Mischungen hiervon.

8. Zusammensetzung nach einem der vorhergehenden Ansprüche, **dadurch gekennzeichnet, dass** die Zusammensetzung mindestens ein anionisches, kationisches, amphoteres oder nichtionisches Tensid enthält, wobei die anionischen Tenside vorzugsweise ausgewählt sind aus der Gruppe der Sulfonate wie Natriumtoluolxylolsulfonat, Natriumtoluolsulfonat, Natriumcumolsulfonat, Natriumdecyldiphenylethersulfonat, Natriumdodecylbenzolsulfonat, Natriumdodecyldiphenylethersulfonat, Natrium-1-octansulfonat, Natriumtetradecansulfonat, Natriumpentadecansulfonat, Natriumheptadecansulfonat und Kaliumtoluolsulfonat
und
die amphoteren Tenside vorzugsweise ausgewählt sind aus der Gruppe der N-Alkylglycine, N-Alkylpropionsäuren, N-Alkylaminobuttersäuren, N-Alkyliminodipropionsäuren, N-Hydroxyethyl-N-alkylamidopropylglycin, N-Alkyltaurin, N-Alkylsacosin, 2-Alkylaminopropionsäuren und N-Alkylaminoessigsäuren mit 8 bis 24 Kohlenstoffatomen in der Alkylgruppe
und
die nichtionischen Tenside vorzugsweise ausgewählt sind aus der Gruppe der Alkylpolyglycoside.

9. Zusammensetzung nach einem der vorhergehenden Ansprüche, **dadurch gekennzeichnet, dass** die Zusammensetzung außerdem Duftöle oder natürliche, naturidentische oder synthetische Duftstoffe enthält.

10. Zusammensetzung nach einem der vorhergehenden Ansprüche, **dadurch gekennzeichnet, dass** die Zusammensetzung mindestens einen Lösungsvermittler auf Basis eines Glykols oder Glykolethers, beispielsweise Dipropylengykol, Tripropylenglykol-n-butylester, Dipropylenglykol-n-propylether, Dipropylenglykol-n-butylether, Dipropylenglykoldimethylether, Dipropylenglykolmonomethylether, Propylenglykolisopropylether, Tributylphenolpolyglykolether, Propylenglykoltertiärbutylether, Hexylenglykol, 1,2-Propylenglykol, Dipropylenglykol, Monoethylenglykol, Butylglykol, Dibutylglykol, Methyldigykol, enthält.

11. Verwendung einer Zusammensetzung nach einem der Ansprüche 1 bis 10 als Demarkierungsmittel, insbesondere zur Entfernung von Farbahnmarkierungen und Hallenbodenmarkierungen.

## Claims

1. A composition for the removal of markings, in particular roadway markings or floor markings, containing:
5 - 50 wt.% of at least one aromatic alcohol,
2 - 70 wt.% of one or more dibasic esters, of which at least one ester has the formula (i) 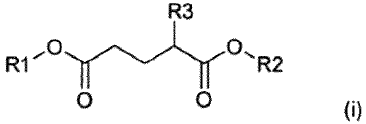 where R1, R2, and R3 are independent linear or branched alkyl radicals with 1 through 10 carbon atoms.

2. The composition according to Claim 1, **characterized in that** the dibasic ester of the formula (i) is 2-methylpentane diacid dimethyl ester.

3. The composition according to Claim 1 or 2, **characterized in that** a carboxylic acid ester of the formula (ii) 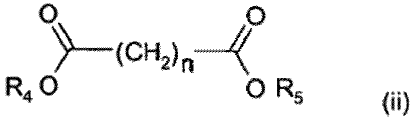 is contained as an additional dibasic ester, where n = 0 through 10, and R4 and R5 are independent linear or branched alkyl radicals with 1 through 10 carbon atoms, or a carboxylic acid ester, which, in contrast to the ester of formula (ii), has one or multiple substitution(s) by a linear or branched alkyl radical with 1 through 10 carbon atoms or by hydroxy functions in the chain.

4. The composition according to one of the preceding claims, **characterized in that** the composition contains a total of 30 through 50 wt.% of dibasic ester.

5. The composition according to one of the preceding claims, **characterized in that** the composition contains 20 - 30 wt.% aromatic alcohol.

6. The composition according to one of the preceding claims, **characterized in that** the aromatic alcohol is selected from saturated or unsaturated, aromatic, substituted, unsubstituted, liquid, or solid alcohols, preferably from benzyl alcohol, 2-benzyl heptanol, 2-benzyloxy ethanol, 4 benzyloxy benzyl alcohol, 3,4-dimethoxy benzyl alcohol, 3,5-dimethyl benzyl alcohol, 4-ethyl benzyl alcohol, 4-isopropylbenzyl alcohol, 2-methyl benzyl alcohol, 4-methoxybenzyl alcohol, 2-phenoxy-1-ethanol, 4-phenyl-1-butanol, 1-phenyl-1-propanol, 3-phenyl-1-propanol, 4-tert-butyl benzyl alcohol, or *trans-3-phenyl* allyl alcohol, and mixtures thereof, wherein the alcohol is particularly preferably benzyl alcohol.

7. The composition according to one of the preceding claims, **characterized in that** the composition contains a thickener, preferably selected from the group agar-agar, carageenan, tragacanth, gum arabic, guar meal, carob bean flour, starches, gelatins, casein, alginate casein, pectins, polyoses, dextrines, carboxymethyl celluloses, cellulose ethers, polyacrylic compounds, poly methacrylic compounds, vinyl polymers, polycarbonate acids, polyethers, polyimines, polyamides, titanium dioxides, silicon dioxides, or mixtures thereof.

8. The composition according to one of the preceding claims, **characterized in that** the composition contains at least one anionic, cationic, amphoteric, or nonionic surfactant, wherein the anionic surfactants are preferably selected from the group of sulfonates, like sodium p-toluene xylene sulfonate, sodium p-toluenesulfonate, sodium cumolsulfonate, sodium decyl diphenyl ether sulfonate, sodium dodecyl benzenesulfonate, sodium dodecyl diphenyl ether sulfonate, sodium 1-octanesulfonate, sodium tetradecane sulfonate, sodium pentadecane sulfonate, sodium heptadecane sulfonate, and potassium toluene sulfonate, and
the amphoteric surfactants are preferably selected from the group of n-alkyl glycines, n-alky propionic acids, n-alkyl amino butyric acids, n-alkyl imino diproprionic acids, n-hydroxyethyl n-alkyl amidopropyl glycine, n-alkyl taurine, n-alkyl sarcosine, 2-alkyl amino propionic acids, and n-alkyl amino acetic acids with 8 through 24 carbon atoms in the alkyl group, and
the nonionic surfactants are preferably selected from the group of alkyl polyglycosides.

9. The composition according to one of the preceding claims, **characterized in that** the composition additionally contains scented oils or natural, nature-identical, or synthetic fragrances.

10. The composition according to one of the preceding claims, **characterized in that** the composition contains at least one solvent based on a glycol or glycol ether, for example, dipropylene glycol, tripropylene glycol-n-butylester, dipropylene glycol-n-propyl ether, dipropylene glycol-n-butyl ether, dipropylene glycol dimethyl ether, dipropylene glycol monomethyl ether, propylene glycol isopropyl ether, tributyl phenol polyglycol ether, propylene glycol tertiary butyl ether, hexylene glycol, 1,2-propylene glycol, dipropylene glycol, monoethylene glycol, butyl glycol, dibutyl glycol, methyl diglycol.

11. A use for a composition according to one of Claims 1 through 10 as a demarking means, in particular for the removal of roadway markings or floor markings.

## Revendications

1. Composition pour enlèvement de marquages, en particulier de marquages sur chaussée ou de marquages au sol en salle de sport, laquelle composition contient
- de 5 à 50 % en poids d'au moins un alcool aromatique,
- et de 2 à 70 % en poids d'un ou de plusieurs diester(s), dont au moins l'un est un ester de formule (i) : 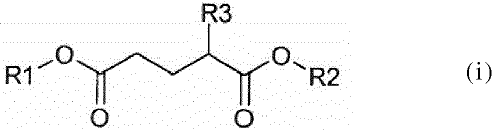 dans laquelle R1, R2 et R3 représentent, indépendamment l'un de l'autre, un groupe alkyle linéaire ou ramifié, comportant de 1 à 10 atomes de carbone.

2. Composition conforme à la revendication 1, **caractérisée en ce que** le diester de formule (i) est du 2-méthyl-pentanedioate de diméthyle.

3. Composition conforme à la revendication 1 ou 2, **caractérisée en ce qu'**elle contient comme autre diester un ester d'acide carboxylique, de formule (ii) : 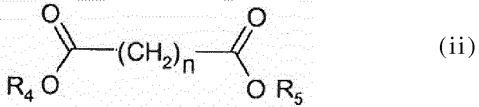 dans laquelle l'indice n vaut de 0 à 10 et R4 et R5 représentent, indépendamment l'un de l'autre, un groupe alkyle linéaire ou ramifié, comportant de 1 à 10 atomes de carbone,
ou un ester d'acide carboxylique dont la chaîne, par rapport à un ester de formule (ii), porte en tant que substituant(s) un ou plusieurs groupe(s) alkyle linéaire(s) ou ramifié(s), comportant de 1 à 10 atomes de carbone, ou un groupe fonctionnel hydroxyle.

4. Composition conforme à l'une des revendications précédentes, **caractérisée en ce que** la composition contient au total de 30 à 50 % en poids de diesters.

5. Composition conforme à l'une des revendications précédentes, **caractérisée en ce que** la composition contient de 20 à 30 % en poids d'alcool aromatique.

6. Composition conforme à l'une des revendications précédentes, **caractérisée en ce que** l'alcool aromatique est choisi parmi les alcools aromatiques saturés ou insaturés, liquides ou solides et porteurs ou non de substituant(s), et de préférence parmi les suivants : alcool benzylique, 2-benzyl-heptanol, 2-benzyloxy-éthanol, alcool 4-benzyloxy-benzylique, alcool 3,4-diméthoxy-benzylique, alcool 3,5-diméthyl-benzylique, alcool 4-éthyl-benzylique, alcool 4-isopropyl-benzylique, alcool 2-méthyl-benzylique, alcool 4-méthoxy-benzylique, 2-phénoxy-éthane-1-ol, 4-phényl-butane-1-ol, 1-phényl-propane-1-ol, 3-phényl-propane-1-ol, alcool 4-tertiobutyl-benzylique et alcool trans-3-phényl-allylique, ainsi que leurs mélanges, étant entendu que l'alcool qui est particulièrement préféré est l'alcool benzylique.

7. Composition conforme à l'une des revendications précédentes, **caractérisée en ce que** la composition contient un épaississant qui est choisi de préférence dans l'ensemble constitué par les suivants : agar-agar, carragheen, gomme adragante, gomme arabique, gomme de guar, gomme de caroube, amidon, gélatine, caséine, alginates, pectine, polyosides, dextrine, carboxyméthyl-cellulose, éthers de cellulose, composés polyacryliques et polyméthacryliques, polymères polyvinyliques, polymères poly(acide carboxylique), polyéthers, polyimines, polyamides, dioxyde de titane et dioxyde de silicium, ainsi que leurs mélanges.

8. Composition conforme à l'une des revendications précédentes, **caractérisée en ce que** la composition contient au moins un tensioactif, anionique, cationique, amphotère ou non-ionique, étant entendu que :
- les tensioactifs anioniques sont choisis de préférence dans le groupe des sulfonates, comme les toluène/xylène-sulfonate de sodium, toluène-sulfonate de sodium, cumène-sulfonate de sodium, décyl-diphényléther-sulfonate de sodium, dodécyl-benzène-sulfonate de sodium, dodécyl-diphényléther-sulfonate de sodium, octane-1-sulfonate de sodium, tétradécane-sulfonate de sodium, pentadécane-sulfonate de sodium, heptadécane-sulfonate de sodium et toluène-sulfonate de potassium,
- les tensioactifs amphotères sont choisis de préférence dans l'ensemble formé par les N-alkyl-glycines, acides N-alkyl-amino-propioniques, acides N-alkyl-amino-butyriques, acides N-alkyl-imino-dipropioniques, N-hydroxyéthyl-N-(alkyl-amido-propyl)-glycines, N-alkyl-taurines, N-alkyl-sarcosines, acides 2-(alkyl-amino)-propioniques et acides N-alkyl-amino-acétiques dont le groupe alkyle comporte de 8 à 24 atomes de carbone,
- et les tensioactifs non-ioniques sont choisis de préférence dans le groupe des alkyl-polyglycosides.

9. Composition conforme à l'une des revendications précédentes, **caractérisée en ce que** la composition comprend en outre des huiles odorantes ou des substances odorantes naturelles, identiques au naturel ou synthétiques.

10. Composition conforme à l'une des revendications précédentes, **caractérisée en ce que** la composition contient au moins un agent de solubilisation à base d'un glycol ou d'un éther de glycol, par exemple dipropylène-glycol, éther n-butylique de tripropylène-glycol, éther n-propylique de dipropylène-glycol, éther n-butylique de dipropylène-glycol, éther diméthylique de dipropylène-glycol, éther monométhylique de dipropylène-glycol, éther isopropylique de propylène-glycol, éther de tributyl-phénol et de polyglycol, éther tertiobutylique de propylène-glycol, hexylène-glycol, 1,2-propylène-glycol, dipropylène-glycol, monoéthylène-glycol, butyl-glycol, dibutyl-glycol, ou méthyldiglycol.

11. Utilisation d'une composition conforme à l'une des revendications 1 à 10 comme agent d'enlèvement de marquage, en particulier pour enlever des marquages sur chaussée ou des marquages au sol en salle de sport.
